# EUROPÄISCHE PATENTSCHRIFT

(11) **EP 3 861 047 B1**
(45) Veröffentlichungstag und Bekanntmachung des Hinweises auf die Patenterteilung: **03.08.2022**
(21) Anmeldenummer: 19773879.2
(22) Anmeldetag: 30.09.2019
(51) Int. Cl.: C08G 59/50, C09D 163/00, C08L 63/00

(54) **HÄRTER FÜR EPOXIDHARZE**
HARDENER FOR EPOXY RESINS
DURCISSEUR POUR DES RESINS D'EPOXIDES

(30) Priorität: 01.10.2018 EP 18197987
(43) Veröffentlichungstag der Anmeldung: 11.08.2021
(73) Patentinhaber: Sika Technology AG, 6340 Baar (CH)
(72) Erfinder: KASEMI, Edis, 8046 Zürich (CH); KRAMER, Andreas, 8008 Zürich (CH); STADELMANN, Ursula, 8046 Zürich (CH); BURCKHARDT, Urs, 8049 Zürich (CH)
(74) Vertreter: Sika Patent Attorneys
(86) Internationale Anmeldenummer: PCT/EP2019/076493
(87) Internationale Veröffentlichungsnummer: WO 2020/070083

(56) Entgegenhaltungen:
- EP-A1- 2 546 230
- EP-A1- 3 138 863
- DE-A1- 2 853 752
- US-A1- 2009 023 846

## Beschreibung

### Technisches Gebiet

Härter für Epoxidharze, Epoxidharz-Zusammensetzungen und ihre Verwendung, insbesondere als Beschichtung oder Klebstoff.

### Stand der Technik

Beschichtungen und Klebstoffe auf Epoxidharz-Basis sind im Bauwesen weit verbreitet. Sie bestehen aus flüssigen oder pastösen Harz- und Härterkomponenten, welche vor der Applikation gemischt werden und dann bei Umgebungstemperaturen im Bereich von etwa 5 bis 35°C zu einem hochfesten und beständigen Material aushärten. Solche Epoxidharz-Zusammensetzungen haben insbesondere bei flächiger Anwendung eine Neigung zu Oberflächenstörungen wie Trübungen, Flecken, Rauheit oder Klebrigkeit, was auch als "Blushing" bezeichnet wird. Blushing wird durch die Salzbildung der in der Härterkomponente enthaltenen Amine mit Kohlendioxid (CO₂) aus der Luft verursacht und tritt besonders bei hoher Luftfeuchtigkeit und tiefen Temperaturen auf. Insbesondere in ästhetisch anspruchsvollen Beschichtungsanwendungen wie Bodenbelägen ist das Auftreten von Blushing-bedingten Oberflächenstörungen äusserst unvorteilhaft und erfordert meist ein aufwendiges Nachbearbeiten bzw. Überbeschichten der schadhaften Stellen oder häufig sogar der ganzen Beschichtung.

Mittels Verdünnern wird die Viskosität einer Epoxidharz-Zusammensetzung gesenkt, damit sie einfach applizierbar ist und die Substratoberflächen gut benetzt. Gleichzeitig vermindern Verdünner auch die Anfälligkeit auf Blushing. Die üblichen Verdünner, wie beispielsweise Benzylalkohol, sind flüchtige Verbindungen (VOC oder SVOC), welche bei der Aushärtung nicht in die Polymermatrix eingebaut werden und somit zu Emissionen führen können. Für emissionsarme Produkte, wie sie von Verbrauchern zunehmend nachgefragt werden, können Verdünner deshalb nur in geringer Menge oder gar nicht verwendet werden.

Zur Verminderung von Blushing und als Reaktivverdünner können in der Härterkomponente alkylierte Amine eingesetzt werden, wie in EP 2,943,464, WO 2016/023839, EP 3,138,863 oder EP 3,144,335 beschrieben. Alkylierte Amine führen aber zu einer verlangsamten Aushärtung und senken die nach der Aushärtung erhaltene Glasübergangstemperatur, was sie insbesondere für Klebstoffanwendungen unattraktiv macht.

Polyalkylenamine wie TETA, TEPA oder N4-Amin sind gebräuchliche Härter für Epoxidharze. Sie ermöglichen eine rasche Aushärtung, verstärken aber die Anfälligkeit auf Blushing-bedingte Fehler und können nach der Aushärtung eine erhöhte Sprödigkeit bewirken, was sich in einer geringen Dehnbarkeit und verminderter Festigkeit und Haftkraft zeigen kann. Für eine hohe Haftkraft darf ein Klebstoff nicht zu spröd sein, da er sonst trotz guter Adhäsion bereits bei geringer Belastung brechen kann.

### Darstellung der Erfindung

Aufgabe der vorliegenden Erfindung ist es, einen Härter für Epoxidharze zur Verfügung zu stellen, der die Nachteile des Standes der Technik in Bezug auf Viskosität, Blushing, Aushärtungsgeschwindigkeit, Glasübergangstemperatur und Sprödigkeit überwindet.

Diese Aufgabe wird mit dem Härter wie in Anspruch 1 beschrieben gelöst. Der erfindungsgemässe Härter basiert auf einer bestimmten Kombination aus mindestens einem alkylierten Amin **A1** und mindestens einem Amin **A2,** welches ein Polyalkylenamin oder Polyethylenimin ist.

Der erfindungsgemässe Härter ist niedrigviskos und verdünnt die Harzkomponente sehr gut. Überraschenderweise zeigt er trotz der Anwesenheit des Blushing-anfälligen Amins **A2** wenig Tendenz zu Blushing-bedingten Fehlern. Dabei ermöglicht er eine hohe Aushärtegeschwindigkeit, schon bei einem überraschend geringen Anteil an Amin **A2**, ohne dass die Topfzeit übermässig darunter leidet. Bei der Aushärtung entsteht ein hartes, wenig sprödes Material mit hoher Haftkraft und ausreichend hoher Glasübergangstemperatur. Alkylierte Amine sind herstellungsbedingt etwas teurer als die üblicherweise als Härter für Epoxidharze verwendeten Amine. Durch die Mitverwendung eines kostengünstigen und breit verfügbaren Amins **A2** ist der erfindungsgemässe Härter auch wirschaftlich besonders attraktiv.

Der erfindungsgemässe Härter ermöglicht emissionsarme Epoxidharz-Produkte mit guter Verarbeitbarkeit und schneller Aushärtung, insbesondere auch in der Kälte. Bei flächiger Anwendung entstehen auch bei feuchtkalten Bedingungen überraschend schöne Oberflächen mit kaum Blushing-bedingten Fehlern. Nach der Aushärtung zeigen die Produkte eine hohe Festigkeit, hohe Haftkräfte und eine hohe Glasübergangstemperatur; ausserdem neigen sie kaum zum Vergilben. Solche Epoxidharz-Produkte sind vorteilhaft verwendbar als Beschichtungen, insbesondere als Bodenbeschichtungen, wo emissionsarme oder emissionsfreie Produkte gewünscht sind, die auch mit wenig oder ohne Verdünner niedrigviskos und gut verarbeitbar sind und hohe ästhetische Ansprüche erfüllen müssen, und als Klebstoffe, wo schnell aushärtende Produkte mit langer Topfzeit und Offenzeit, hoher Festigkeit, hoher Haftkraft und hoher Glasübergangstemperatur gefordert sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Härter für Epoxidharze enthaltend mindestens ein Amin **A1** der Formel (I), 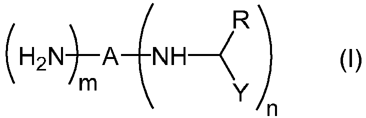 wobei
m für 0 oder 1, n für 1 oder 2 und (m+n) für 2 stehen,
A für 1,2-Ethylen oder 1,2-Propylen steht,
R für H oder einen Alkylrest mit 1 bis 12 C-Atomen steht, und
Y für einen gegebenenfalls substituierten aromatischen oder cycloaliphatischen Rest mit 6 bis 20 C-Atomen steht,
und mindestens ein Amin **A2**, welches ein Polyalkylenamin oder Polyethylenimin ist, wobei das Gewichtsverhältnis zwischen Amin **A1** und Amin **A2** im Bereich von 20/1 bis 1/2 liegt.

Als "Polyalkylenamin" wird ein lineares Polyamin bezeichnet, welches mindestens drei durch Alkylenreste voneinander getrennte Aminogruppen enthält.

Als "Polyethylenimin" wird ein Produkt aus der Polymerisation von Ethylenimin bezeichnet. Es besteht hauptsächlich aus über 1,2-Ethylen-Reste verbundenen primären, sekundären und tertiären Aminogruppen.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet.

Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Topfzeit" wird die Verarbeitbarkeitsdauer einer Epoxidharz-Zusammensetzung bezeichnet, d.h. die maximal mögliche Zeitspanne zwischen dem Mischen der Komponenten und der Applikation der vermischten Zusammensetzung, in der diese in einem ausreichend fliessfähigen Zustand ist und die Substratoberflächen benetzen kann.

Als "Offenzeit" eines Klebstoffs wird die für eine kraftschlüssige Verbindung maximal mögliche Zeitspanne zwischen der Applikation des Klebstoffs und dem Fügen der zu verklebenden Teile bezeichnet.

Als "Raumtemperatur" wird eine Temperatur von 23°C bezeichnet.

Bevorzugt ist der Härter nicht wasserbasiert. Insbesondere enthält er weniger als 10 Gewichts-%, bevorzugt weniger als 5 Gewichts-%, besonders bevorzugt weniger als 2.5 Gewichts-%, Wasser. Ein solcher Härter ist besonders geeignet für die Aushärtung von nicht emulgierten Epoxidharzen und ermöglicht sehr hydrophobe und beständige Materialien.

Bevorzugt steht A für 1,2-Ethylen. Ein solches Amin **A1** ermöglicht eine besonders schnelle Aushärtung.

Bevorzugt steht R für H oder Methyl oder Phenyl, besonders bevorzugt für H oder Methyl, insbesondere für H. Ein solches Amin **A1** ist besonders einfach erhältlich.

Bevorzugt steht Y für einen gegebenenfalls substituierten Phenyl-, 1-Naphthyl- oder Cyclohexyl-Rest.

Besonders bevorzugt steht Y für einen Phenyl-Rest. Ein solches Amin **A1** ermöglicht besonders schöne Oberflächen.

Das Amin **A1** der Formel (I) ist bevorzugt ausgewählt aus der Gruppe bestehend aus N-Benzyl-1,2-ethandiamin, N,N'-Dibenzyl-1,2-ethandiamin, N-(1-Naphthylmethyl)-1,2-ethandiamin, N-Cyclohexylmethyl-1,2-ethandiamin, N-Benzyl-1,2-propandiamin und N,N'-Dibenzyl-1,2-propandiamin.

Bevorzugt sind Amine **A1** der Formel (I), bei welchen m und n jeweils für 1 stehen. Diese ermöglichen eine besonders schnelle Aushärtung.

Gegebenenfalls enthält ein solches Amin **A1** der Formel (I) zusätzlich einen gewissen Anteil an dialkyliertem Amin, also Amin **A1** der Formel (I), bei welchem m für 0 und n für 2 stehen. Dabei beträgt das Gewichtsverhältnis zwischen monoalkyliertem (n und m stehen jeweils für 1) und dialkyliertem Amin (n steht für 2) bevorzugt mindestens 50/50, besonders bevorzugt mindestens 65/35, insbesondere mindestens 70/30.

Besonders bevorzugt ist N-Benzyl-1,2-ethandiamin oder N-Benzyl-1,2-propandiamin.

N-Benzyl-1,2-ethandiamin enthält gegebenenfalls Anteile von N,N'-Dibenzyl-1,2-ethandiamin. N-Benzyl-1,2-propandiamin enthält gegebenenfalls Anteile von N,N'-Dibenzyl-1,2-propandiamin.

Am meisten bevorzugt als Amin **A1** der Formel (I) ist N-Benzyl-1,2-ethandiamin. Gegebenenfalls enthält dieses bis zu 35 Gewichts-% N,N'-Dibenzyl-1,2-ethandiamin bezogen auf die Summe der beiden Amine. Damit wird eine besonders schnelle Aushärtung ermöglicht.

Bevorzugt wird das Amin **A1** der Formel (I) als Bestandteil einer Reaktionsmischung aus der partiellen Alkylierung von 1,2-Ethandiamin oder 1,2-Propandiamin mit mindestens einem Alkylierungsmittel eingesetzt.

Bevorzugt ist die Alkylierung eine reduktive Alkylierung, wobei als Alkylierungsmittel ein Aldehyd oder Keton und Wasserstoff eingesetzt wird.

Bevorzugt wird die reduktive Alkylierung in Anwesenheit eines geeigneten Katalysators durchgeführt. Als Katalysator bevorzugt sind Palladium auf Kohle (Pd/C), Platin auf Kohle (Pt/C), Adams-Katalysator oder Raney-Nickel, insbesondere Palladium auf Kohle oder Raney-Nickel.

Bei Verwendung von molekularem Wasserstoff wird die reduktive Alkylierung bevorzugt in einer Druckapparatur bei einem Wasserstoff-Druck von 5 bis 150 bar, insbesondere 10 bis 100 bar, gearbeitet. Dies kann in einem Batch-Prozess oder bevorzugt in einem kontinuierlichen Prozess erfolgen.

Die reduktive Alkylierung wird bevorzugt bei einer Temperatur im Bereich von 40 bis 120°C, insbesondere 60 bis 100°C, durchgeführt.

Dabei wird 1,2-Ethandiamin oder 1,2-Propandiamin bevorzugt im stöchiometrischen Überschuss gegenüber dem Aldehyd oder Keton eingesetzt und der Überschuss nach der Alkylierung zumindest teilweise aus der Reaktionsmischung entfernt, insbesondere mittels Stripping. Falls gewünscht, kann die Reaktionsmischung anschliessend weiter gereinigt werden, insbesondere indem das monoalkylierte Amin mittels Destillation zumindest teilweise vom dialkylierten Amin befreit wird.

Der erfindungsgemässe Härter für Epoxidharze enthält weiterhin mindestens ein Amin **A2,** welches ein Polyalkylenamin oder Polyethylenimin ist.

Als Polyethylenimin geeignet sind Produkte aus der Polymerisation von Ethylenimin. Es handelt sich dabei um Mischungen verschiedener Moleküle mit Molekulargewichtsverteilungen, wie sie typischerweise bei Polymerisationen entstehen. Bevorzugt hat das Polyethylenimin ein mittleres Molekulargewicht Mₙ im Bereich von 200 bis 1'500 g/mol, insbesondere 200 bis 1'000 g/mol.

Geeignete Polyethylenimine sind durch bekannte Prozesse herstellbar, oder sie sind kommerziell erhältlich, insbesondere als Lupasol^{®} FG oder Lupasol^{®} G 20 wasserfrei (von BASF), oder als Epomin^{®} SP-003, Epomin^{®} SP-006, Epomin^{®} SP-012 oder Epomin^{®} SP-018 (von Nippon Shokubai).

Bevorzugt als Amin **A2** sind Polyalkylenamine, insbesondere solche der im Folgenden dargestellten Formel (II). Damit werden Epoxidharz-Produkte mit besonders guter Verarbeitbarkeit erhalten.

Bevorzugt ist das Amin **A2** ein Polyalkylenamin der Formel (II), 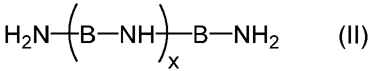 wobei
x für eine ganze Zahl von 1 bis 6 steht, und
B unabhängig voneinander für einen Alkylenrest mit 2 bis 6 C-Atomen steht.

Ein Amin **A2** der Formel (II) wird insbesondere in einer technischen Qualität eingesetzt. Eine technische Qualität resultiert typischerweise aus dem Herstellprozess des Amins der Formel (II), wobei der Gehalt an Polyalkylenamin der Formel (II) je nach Herstellungsart und Reinigungsprozess unterschiedlich sein kann.

Ein geeignetes Polyalkylenamin der Formel (II) ist insbesondere Diethylentriamin (DETA), Triethylentetramin (TETA), Tetraethylenpentamin (TEPA), Pentaethylenhexamin (PEHA), höhere Homologe linearer Polyethylenamine, Dipropylentriamin (DPTA), N-(2-Aminoethyl)-1,3-propandiamin (N3-Amin), N,N'-Bis(3-aminopropyl)-ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin oder Bis(6-aminohexyl)amin (BHMT).

Bevorzugt steht x für 1 oder 2 oder 3 oder 4.

Bevorzugt steht B für 1,2-Ethylen oder 1,3-Propylen oder 1,6-Hexylen.

Bevorzugt als Polyalkylenamin der Formel (II) sind TETA, TEPA, PEHA oder N4-Amin. Mit diesen Aminen **A2** werden Epoxidharz-Produkte mit besonders schneller Aushärtung und hoher Glasübergangstemperatur erhalten.

Bevorzugt als Polyalkylenamin der Formel (II) ist weiterhin BHMT. Mit diesem Amin **A2** werden Klebstoffe mit besonders geringer Sprödigkeit und besonders hoher Haftkraft erhalten. Insbesondere wird BHMT dabei eingesetzt in einer technischen Qualität, wie sie bei der Herstellung von 1,6-Hexandiamin anfällt. Solche technischen Qualitäten von BHMT sind kommerziell erhältlich, beispielsweise als Dytek^{®} BHMT Amine (50-78%) (von Invista).

Es kann vorteilhaft sein, eine Mischung von zwei oder mehr Aminen **A2** einzusetzen, insbesondere eine Mischung aus BHMT und TETA, TEPA, PEHA oder N4-Amin. Eine solche Mischung ermöglicht ein wenig sprödes Material von besonders hoher Haftkraft bei hoher Glasübergangstemperatur.

Bevorzugt liegt das Gewichtsverhältnis zwischen Amin **A1** und Amin **A2** im Bereich von 15/1 bis 1/2. Damit werden Epoxidharz-Produkte mit langer Topfzeit, schneller Aushärtung, hoher Robustheit gegenüber Blushing-bedingten Fehlern und hoher Glasübergangstemperatur erhalten.

In einer Ausführungsform der Erfindung liegt das Gewichtsverhältnis zwischen Amin **A1** und Amin **A2** bevorzugt im Bereich von 15/1 bis 1/1, insbesondere 10/1 bis 2/1. Ein solcher Härter ist besonders geeignet für Epoxidharz-Beschichtungen, wo die Robustheit gegenüber Blushing-bedingten Fehlern besonders hoch sein muss.

In einer weiteren Ausführungsform der Erfindung liegt das Gewichtsverhältnis zwischen Amin **A1** und Amin **A2** bevorzugt im Bereich von 10/1 bis 1/2, insbesondere 5/1 bis 1/2. Ein solcher Härter ist besonders geeignet für Epoxidharz-Klebstoffe, wo Haftkraft und Glasübergangstemperatur besonders hoch sein sollen.

Der Härter enthält gegebenenfalls mindestens ein weiteres Amin. Ein solches weiteres Amin kann die Eigenschaften des Härters in gewünschter Weise beeinflussen, beispielsweise die Viskosität senken, die Reaktivität erhöhen, das Aminwasserstoff-Equivalentgewicht anpassen oder die Verträglichkeit mit dem Epoxidharz verbessern, oder es kann ökonomische Vorteile aufweisen.

Als weiteres Amin bevorzugt sind aliphatische, cycloaliphatische oder arylaliphatische Polyamine mit mindestens 2, insbesondere mindestens 3, Aminwasserstoffen, wie insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, 1,3-Bis(aminomethyl)-cyclohexan, 1,4-Bis(aminomethyl)cyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2(4)-Methyl-1,3-diaminocyclohexan, 2,5(2,6)-Bis(aminomethyl)bicyclo[2.2.1]heptan (NBDA), 3(4),8(9)-Bis(aminomethyl)tricyclo[5.2.1.0^{2,6}]-decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)-benzol (MXDA), 1,4-Bis(aminomethyl)benzol, Bis(2-aminoethyl)ether, 3,6-Dioxa-octan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatri-decan-1,13-diamin oder höhere Oligomere dieser Diamine, Bis(3-aminopropyl)-polytetrahydrofurane oder andere Polytetrahydrofurandiamine, cycloaliphatische Ethergruppen-haltige Diamine aus der Propoxylierung und nachfolgenden Aminierung von 1,4-Dimethylolcyclohexan, erhältlich insbesondere als Jeffamine^{®} RFD-270 (von Huntsman), oder Polyoxyalkylendi- oder -triamine, insbesondere Jeffamine^{®} D-230, Jeffamine^{®} D-400, Jeffamine^{®} D-2000, Jeffamine^{®} EDR-104, Jeffamine^{®} EDR-148, Jeffamine^{®} EDR-176, Jeffamine^{®} T-403, Jeffamine^{®} T-3000, Jeffamine^{®} T-5000 (alle von Huntsman), oder entsprechende Amine von BASF oder Nitroil, 2-Aminoethylpiperazin, 3-Dimethylaminopropylamin (DMAPA), 3-(3-(Dimethylamino)propylamino)propylamin (DMAPAPA), N-Benzyldiethylentriamin, N-Benzyltriethylentetramin, N,N'-Dibenzyltriethylentetramin, N"-Benzyl-N,N'-bis(3-aminopropyl)ethylendiamin, N",N'"-Dibenzyl-N,N'-bis(3-aminopropyl)ethylendiamin, N-Benzyl-1,3-bis(aminomethyl)benzol, N,N'-Dibenzyl-1,3-bis(aminomethyl)benzol, N-(2-Ethylhexyl)-1,3-bis(aminomethyl)benzol, N,N'-Bis(2-ethylhexyl)-1,3-bis(aminomethyl)benzol, styrolisiertes MXDA (erhältlich als Gaskamine^{®} 240 von Mitsubishi Gas Chemical), Addukte der obengenannten oder weiterer Polyamine mit Epoxiden oder Epoxidharzen, insbesondere Addukte mit Diepoxiden oder Monoepoxiden, oder Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA, oder Mannich-Basen, insbesondere Phenalkamine, also Umsetzungsprodukte von Phenolen, insbesondere Cardanol, mit Aldehyden, insbesondere Formaldehyd, und Polyaminen.

Bevorzugt enthält der erfindungsgemässe Härter mindestens ein weiteres Amin ausgewählt aus der Gruppe bestehend aus TMD, 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)methan, IPDA, 2(4)-Methyl-1,3-diaminocyclohexan, MXDA, Polyoxypropylendiaminen mit einem mittlerem Molekulargewicht Mₙ im Bereich von 200 bis 500 g/mol, DMAPAPA, Addukte dieser oder weiterer Polyamine mit Mono- oder Diepoxiden und Mannich-Basen.

Davon bevorzugt ist TMD, 1,3-Bis(aminomethyl)cyclohexan, IPDA, MXDA oder DMAPAPA.

Davon bevorzugt ist weiterhin ein Addukt von MXDA und/oder IPDA und/oder TETA mit einem Bisphenol-A- oder Bisphenol-F-Diglycidylether, insbesondere im Molverhältnis zwischen dem Amin-Molekül und den Epoxidgruppen im Bereich von 3:1 bis 50:1.

Davon bevorzugt ist weiterhin ein Addukt aus MPMD oder 1,2-Propandiamin mit Kresylglycidylether, insbesondere ortho-Kresylglycidylether. Die Adduktierung wird bevorzugt mit einem Überschuss an MPMD oder 1,2-Propandiamin gegenüber dem Kresylglycidylether durchgeführt und das nicht adduktierte Amin nach der Umsetzung mittels Destillation entfernt.

Bevorzugt kann der Härter eine Kombination aus zwei oder mehr der genannten weiteren Amine enthalten.

Besonders bevorzugt als weiteres Amin ist IPDA. Ein solcher Härter ist breit verfügbar, kostengünstig und ermöglicht Epoxidharz-Produkte mit besonders hoher Härte und Glasübergangstemperatur.

Besonders bevorzugt als weiteres Amin ist weiterhin DMAPAPA. Ein solcher Härter ist besonders geeignet für Epoxidharz-Klebstoffe. Er ermöglicht eine besonders hohe Druckfestigkeite und besonders hohe Haftkräfte, insbesondere auf Stahl.

Der Härter enthält gegebenenfalls mindestens einen Verdünner.

Geeignet sind insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol (aus Cashewschalen-Öl, enthaltend als Hauptbestandteil 3-(8,11,14-Pentadecatrienyl)phenol), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Bevorzugt sind Verdünner mit einem Siedepunkt von mehr als 200°C.

Bevorzugt ist der Verdünner ausgewählt aus der Gruppe bestehend aus Benzylalkohol, styrolisiertem Phenol, ethoxyliertem Phenol, phenolgruppenhaltigen aromatischen Kohlenwasserstoffharzen, insbesondere den Novares^{®}-Typen LS 500, LX 200, LA 300 oder LA 700 (von Rütgers), Diisopropylnaphthalin und Cardanol. Besonders bevorzugt ist Benzylalkohol.

Phenolgruppen-haltige Verdünner zeigen auch eine Wirkung als Beschleuniger.

Der Härter enthält gegebenenfalls mindestens einen Beschleuniger.

Als Beschleuniger geeignet sind Substanzen, welche die Reaktion zwischen Aminogruppen und Epoxidgruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; Nitrate wie insbesondere Calciumnitrat; tertiäre Amine wie insbesondere 1,4-Diazabicyclo[2.2.2]octan, Benzyldimethylamin, α-Methylbenzyldimethylamin, Triethanolamin, Dimethyl-aminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo-[5.4.0]undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)-phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen.

Als Beschleuniger bevorzugt sind Säuren, Nitrate, tertiäre Amine oder Mannich-Basen.

Besonders bevorzugt ist Salicylsäure oder Calciumnitrat oder 2,4,6-Tris(dimethylaminomethyl)phenol oder eine Kombination davon.

Am meisten bevorzugt ist eine Kombination aus Calciumnitrat und 2,4,6-Tris(dimethylaminomethyl)phenol. Damit werden eine besonders schnelle Aushärtung, insbesondere auch bei kalten Temperaturen, und besonders hohe Härten erreicht.

Calciumnitrat wird insbesondere in Form einer wässrigen Lösung mit 20 bis 70 Gewichts-% Calciumnitrat eingesetzt.

Ein weiterer Gegenstand der Erfindung ist eine Epoxidharz-Zusammensetzung umfassend
- eine Harz-Komponente enthaltend mindestens ein Epoxidharz und
- eine Härter-Komponente umfassend den vorgängig beschriebenen Härter enthaltend mindestens einem Amin **A1** der Formel (I) und mindestens ein Amin **A2,** welches ein Polyalkylenamin oder Polyethylenimin ist.

Ein geeignetes Epoxidharz wird auf bekannte Art und Weise erhalten, insbesondere aus der Oxidation von Olefinen oder aus der Reaktion von Epichlorhydrin mit den Polyolen, Polyphenolen oder Aminen.

Geeignete Epoxidharze sind insbesondere aromatische Epoxidharze, insbesondere die Glycidylether von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxy-phenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)-ethan, Bis(4-hydroxyphenyl)ether oder Bis(4-hydroxyphenyl)sulfon;
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylenbis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylol-ethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25°C bezeichnet.

Gegebenenfalls enthält die Harz-Komponente zusätzlich Anteile von Epoxid-Festharz.

Das Epoxidharz ist insbesondere ein Flüssigharz auf der Basis eines Bisphenols, insbesondere ein Bisphenol-A Diglycidylether und/oder Bisphenol-F-Diglycidylether, wie sie kommerziell beispielsweise von Olin, Huntsman oder Momentive erhältlich sind. Diese Flüssigharze weisen eine für Epoxidharze niedrige Viskosität auf und ermöglichen eine schnelle Aushärtung und hohe Härten. Sie können Anteile von Bisphenol A-Festharz oder Novolak-Glycidylethern enthalten.

Die Harz-Komponente kann einen Reaktivverdünner enthalten.

Als Reaktivverdünner bevorzugt sind Epoxidgruppen-haltige Reaktivverdünner, insbesondere Butandioldiglycidylether, Hexandioldiglycidylether, Trimethylolpropandi- oder -triglycidylether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃bis C₁₅-Alkylglycidylether.

Bevorzugt enthält die Epoxidharz-Zusammensetzung mindestens einen weiteren Bestandteil ausgewählt aus der Gruppe bestehend aus Verdünnern, Beschleunigern und Füllstoffen.

Als Beschleuniger geeignet sind die bereits genannten, insbesondere Salicylsäure, Calciumnitrat oder 2,4,6-Tris(dimethylaminomethyl)phenol oder eine Kombination davon. Am meisten bevorzugt ist eine Kombination aus Calciumnitrat und 2,4,6-Tris(dimethylaminomethyl)phenol. Damit werden eine besonders schnelle Aushärtung, insbesondere auch bei kalten Temperaturen, und besonders hohe Härten erreicht.

Als Verdünner geeignet sind die bereits genannten, insbesondere solche mit einem Siedepunkt von mehr als 200°C.

Bevorzugt ist der Verdünner ausgewählt aus der Gruppe bestehend aus Benzylalkohol, styrolisiertem Phenol, ethoxyliertem Phenol, phenolgruppenhaltigen aromatischen Kohlenwasserstoffharzen, insbesondere den Novares^{®}-Typen LS 500, LX 200, LA 300 oder LA 700 (von Rütgers), Diisopropylnaphthalin und Cardanol.

Besonders bevorzugt ist Benzylalkohol.

Bevorzugt enthält die Epoxidharz-Zusammensetzung nur einen geringen Gehalt an Verdünnern. Bevorzugt enthält sie weniger als 25 Gewichts-%, besonders bevorzugt weniger als 15 Gewichts-%, insbesondere weniger als 10 Gewichts-%, Verdünner. Dies ermöglicht emissionsarme oder emissionsfreie Epoxidharz-Produkte.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln.

Bevorzugt ist Calciumcarbonat, Quarzmehl und Quarzsand.

Gegebenenfalls enthält die Epoxidharz-Zusammensetzung weitere Hilfs- und Zusatzstoffe, insbesondere die Folgenden:
- Reaktivverdünner, insbesondere die bereits vorgängig erwähnten, oder epoxidiertes Sojaöl oder Leinöl, Acetoacetatgruppen aufweisende Verbindungen, insbesondere acetoacetylierte Polyole, Butyrolakton, Carbonate, Aldehyde, Isocyanate oder Reaktivgruppen aufweisende Silikone;
- Lösemittel;
- weitere Amine, insbesondere Monoamine wie insbesondere Benzylamin oder Furfurylamin oder aromatische Polyamine wie insbesondere 4,4'-, 2,4' und/oder 2,2'-Diaminodiphenylmethan, 2,4- und/oder 2,6-Toluylendiamin, 3,5-Dimethylthio-2,4- und/oder -2,6-toluylendiamin, 3,5-Diethyl-2,4- und/oder -2,6-toluylendiamin;
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid, Eisenoxide oder Chrom(III)oxid;
- Rheologie-Modifizierer, insbesondere Verdicker oder Antiabsetzmittel;
- Haftverbesserer, insbesondere Organoalkoxysilane;
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)-phosphat, Tris(dichloroisopropyl)phosphat, Tris[3-bromo-2,2-bis(bromomethyl)-propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine; oder
- Additive, insbesondere dispergiertes Paraffinwachs, Filmbildehilfsmittel, Netzmittel, Verlaufmittel, Entschäumer, Entlüfter, Stabilisatoren gegen Oxidation, Wärme, Licht oder UV-Strahlung oder Biozide.

Bevorzugt enthält die Epoxidharz-Zusammensetzung weitere Hilfs- und Zusatzstoffe, insbesondere Pigmente, Netzmittel, Verlaufsmittel und/oder Entschäumer. In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.

Die in der Epoxidharz-Zusammensetzung vorhandenen primären und sekundären Aminogruppen und gegebenenfalls vorhandene weitere gegenüber Epoxidgruppen reaktive Gruppen reagieren mit den Epoxidgruppen unter deren Ringöffnung (Additionsreaktion). Als Ergebnis hauptsächlich dieser Reaktion polymerisiert die Zusammensetzung und härtet dadurch aus.

Die Harz- und die Härter-Komponente der Epoxidharz-Zusammensetzung werden in voneinander getrennten Gebinden gelagert. Weitere Bestandteile der Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ebenfalls möglich ist, dass weitere Bestandteile als eigene, weitere Komponente vorhanden sind.

Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung der Epoxidharz-Zusammensetzung werden die Komponenten kurz vor oder während der Applikation miteinander vermischt. Das Mischungsverhältnis zwischen der Harz- und der Härter-Komponente wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1.

Die Vermischung der Komponenten erfolgt mittels eines geeigneten Verfahrens; sie kann kontinuierlich oder batchweise erfolgen. Falls das Vermischen nicht unmittelbar vor der Applikation erfolgt, muss darauf geachtet werden, dass zwischen dem Vermischen der Komponenten und der Applikation nicht zu viel Zeit vergeht und die Applikation innerhalb der Topfzeit erfolgt. Die Vermischung erfolgt insbesondere bei Umgebungstemperatur, welche typischerweise im Bereich von etwa 5 bis 40°C, bevorzugt bei etwa 10 bis 35°C, liegt.

Mit dem Vermischen der beiden Komponenten beginnt die Aushärtung durch chemische Reaktion, wie vorgängig beschrieben. Die Aushärtung erfolgt typischerweise bei einer Temperatur im Bereich von 0 bis 150°C. Bevorzugt erfolgt sie bei Umgebungstemperatur und erstreckt sich typischerweise über einige Tage bis Wochen. Die Dauer hängt unter anderem von der Temperatur, der Reaktivität der Bestandteile und deren Stöchiometrie sowie der Gegenwart von Beschleunigern ab.

Die Applikation der Epoxidharz-Zusammensetzung erfolgt auf mindestens ein Substrat, wobei die Folgenden besonders geeignet sind:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke, insbesondere beschichtete Böden, welche mit einer weiteren Bodenbelagsschicht überschichtet werden.

Die Substrate können bei Bedarf vor dem Applizieren vorbehandelt werden, insbesondere durch physikalische und/oder chemische Reinigungsverfahren oder das Aufbringen eines Aktivators oder eines Primers.

Aus der Aushärtung der beschriebenen Epoxidharz-Zusammensetzung wird eine ausgehärtete Zusammensetzung erhalten.

Die beschriebene Epoxidharz-Zusammensetzung ist vorteilhaft verwendbar als Beschichtung, Primer, Klebstoff, Dichtstoff, Vergussmasse, Giessharz oder als Matrix für Faserverbundwerkstoffe (Composites) wie insbesondere CFK oder GFK. Unter den Begriff der Beschichtung fallen auch Grundierungen, Anstriche, Lacke und Versiegelungen.

Bevorzugt wird die Epoxidharz-Zusammensetzung als Beschichtung oder Klebstoff verwendet.

Besonders bevorzugt wird die beschriebene Epoxidharz-Zusammensetzung als Beschichtung verwendet. Als Beschichtung werden dabei flächig aufgebrachte Beläge aller Art verstanden, insbesondere Bodenbeläge, Anstriche, Lacke, Versiegelungen, Grundierungen, Primer oder Schutzbeschichtungen, insbesondere auch solche für schweren Korrosionsschutz.

Besonders geeignet ist die Epoxidharz-Zusammensetzung als Bodenbelag oder Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden, oder als Voranstrich, Haftanstrich, Korrosionsschutz-Primer oder zur Hydrophobierung von Oberflächen.

Besonders vorteilhaft wird die beschriebene Epoxidharz-Zusammensetzung in emissionsarmen Beschichtungen mit Öko-Gütesiegeln, beispielsweise nach Emicode (EC1 Plus), AgBB, DIBt, Der Blaue Engel, AFSSET, RTS (M1) und US Green Building Council (LEED), verwendet.

Für die Verwendung als Beschichtung weist die Epoxidharz-Zusammensetzung vorteilhaft eine flüssige Konsistenz mit niedriger Viskosität und guten Verlaufseigenschaften auf. Die vermischte Zusammensetzung wird innerhalb der Topfzeit typischerweise flächig als dünner Film mit einer Schichtdicke von etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel. Die Applikation kann auch mit einem Pinsel oder Roller oder als Spritzapplikation erfolgen, beispielsweise als Korrosionsschutzbeschichtung auf Stahl. Bei der Aushärtung entstehen typischerweise weitgehend homogene, glänzende und nichtklebrige Filme von hoher Härte, welche eine gute Haftung zu verschiedensten Substraten aufweisen.

Ein weiterer Gegenstand der Erfindung ist ein Verfahren zum Beschichten umfassend die Schritte
(i) Vermischen der Komponenten der beschriebenen Epoxidharz-Zusammensetzung,
(ii) Applizieren der vermischten Zusammensetzung auf ein Substrat innerhalb der Topfzeit,
gefolgt von der Aushärtung der vermischten Zusammensetzung.

Auf die vollständig oder teilweise ausgehärtete Zusammensetzung kann eine weitere Beschichtung appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung.

Weiterhin besonders bevorzugt wird die beschriebene Epoxidharz-Zusammensetzung als Klebstoff verwendet. Typischerweise weist die Epoxidharz-Zusammensetzung bei der Verwendung als Klebstoff nach dem Vermischen der Komponenten eine pastöse Konsistenz mit strukturviskosen Eigenschaften auf. Bei der Applikation wird der vermischte Klebstoff innerhalb der Topfzeit auf mindestens eines der zu verklebenden Substrate aufgetragen und die Substrate innerhalb der Offenzeit des Klebstoffs zu einer Verklebung gefügt.

Der vermischte Klebstoff wird insbesondere mittels Pinsel, Rolle, Spatel, Rakel, Kelle, oder aus einer Tube, Kartusche oder Dosiervorrichtung appliziert bzw. aufgetragen.

Der Klebstoff ist besonders geeignet für Verwendungen in der Bauindustrie, insbesondere für die Armierung von Bauwerken mittels Stahllamellen oder Lamellen aus Kohlefaser-verstärkten Composite-Kunststoffen (CFK), für Konstruktionen, welche geklebte Beton-Fertigteile enthalten, insbesondere Brücken oder Betontürme für beispielsweise Windkraftanlagen, Schächte, Rohrleitungen oder Tunnels, oder für Konstruktionen, welche geklebte Natursteine, keramische Elemente oder Teile aus Faserzement, Stahl, Gusseisen, Aluminium, Holz oder Polyester enthalten, für die Verankerung von Dübeln oder Stahlstäben in Bohrlöchern, für die Fixierung von beispielsweise Geländern, Brüstungen oder Türrahmen, für Reparaturen wie insbesondere die Verfüllung von Kanten, Löchern oder Fugen bei der Betoninstandsetzung, oder für das Aufkleben von Folien aus Polyvinylchlorid (PVC), flexibilisiertem Polyolefin (Combiflex^{®}) oder haftungsmodifiziertem chlorsulfoniertem Polyethylen (Hypalon^{®}) auf Beton oder Stahl.

Weitere Einsatzgebiete betreffen das strukturelle Kleben in der Bau- oder Fertigungsindustrie, insbesondere als Klebemörtel, Montageklebstoff, Armierungsklebstoff wie insbesondere für das Verkleben von Lamellen aus CFK oder Stahl auf Beton, Mauerwerk oder Holz, als Element-Klebstoff für beispielsweise Brückenelemente, Sandwichelementklebstoff, Fassadenelementklebstoff, Verstärkungsklebstoff, Karrosserieklebstoff oder Halbschalenklebstoff für Rotorblätter von Windturbinen.

Ebenfalls geeignet ist ein solcher Epoxidharz-Klebstoff für das Verfüllen von Hohlräumen wie Rissen, Spalten oder Bohrlöchern, wobei der Klebstoff in den Hohlraum gefüllt oder injiziert wird und nach der Aushärtung diesen ausfüllt und die Flanken des Hohlraums kraftschlüssig miteinander verbindet bzw. verklebt.

Ein weiterer Gegenstand der Erfindung ist ein Verfahren zum Verkleben umfassend die Schritte
(i) Vermischen der Komponenten der beschriebenen Epoxidharz-Zusammensetzung,
(ii) Applizieren der vermischten Zusammensetzung innerhalb der Topfzeit,
   - entweder auf mindestens eines der zu verklebenden Substrate und Fügen der Substrate zu einer Verklebung innerhalb der Offenzeit,
   - oder in einen Hohlraum oder Spalt zwischen mehreren Substraten und gegebenenfalls Einfügen eines Ankers in den Hohlraum oder Spalt innerhalb der Offenzeit,
gefolgt von der Aushärtung der vermischten Zusammensetzung.

Als "Anker" wird dabei insbesondere ein Armierungseisen, ein Gewindestab oder ein Bolzen bezeichnet. Ein solcher wird insbesondere so in einer Mauer, Wand, Decke oder in einem Fundament eingeklebt bzw. verankert, dass ein Teil davon kraftschlüssig verklebt ist und ein Teil davon vorsteht und konstruktiv belastet werden kann.

Verklebt werden können gleichartige oder verschiedene Substrate.

Aus der Applikation und Aushärtung der beschriebenen Epoxidharz-Zusammensetzung bzw. aus dem Verfahren zum Beschichten oder dem Verfahren zum Verkleben wird ein Artikel erhalten, welcher mit der Zusammensetzung beschichtet oder verklebt ist. Dieser Artikel kann ein Bauwerk oder ein Teil davon sein, insbesondere ein Bauwerk des Hoch- oder Tiefbaus, ein Büro, eine Industriehalle, eine Turnhalle, ein Kühlraum, ein Silo, eine Brücke, ein Dach, ein Treppenhaus, ein Balkon, eine Terrasse oder ein Parkdeck, oder er kann ein industrielles Gut oder ein Konsumgut sein, insbesondere ein Pier, eine Offshore-Plattform, ein Schleusentor, ein Kran, eine Spundwand, eine Rohrleitung oder ein Rotorblatt einer Windkraftanlage, oder ein Transportmittel wie insbesondere ein Automobil, ein Lastkraftwagen, ein Schienenfahrzeug, ein Schiff, ein Flugzeug oder ein Helikopter, oder ein Anbauteil davon.

Ein weiterer Gegenstand der Erfindung ist somit ein Artikel, erhalten aus dem beschriebenen Verfahren zum Beschichten oder aus dem beschriebenen Verfahren zum Verkleben.

Die beschriebene Epoxidharz-Zusammensetzung zeichnet sich durch vorteilhafte Eigenschaften aus. Sie ist kostengünstig, gut verarbeitbar, insbesondere auch mit wenig oder ohne Verdünner, so dass emissionsarme oder -freie Produkte zugänglich sind. Sie verfügt über eine lange Topfzeit, eine schnelle Aushärtung auch in der Kälte und eine hohe Robustheit gegenüber Blushing-bedingten Fehlern, insbesondere auch bei feuchtkalten Bedingungen, eine hohe Glasübergangstemperatur und eine geringe Sprödigkeit; ausserdem neigen sie kaum zu Vergilbung. Sie ist besonders geeignet für die Verwendung als Beschichtung, insbesondere für Böden, oder als Klebstoff, welche bei Umgebungstemperaturen appliziert werden.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1 °C und eine relative Luftfeuchtigkeit von 50±5% bezeichnet.

### Beschreibung der Messmethoden:

Die **Viskosität** wurde auf einem thermostatisierten Kegel-Platten-Viskosimeter Rheotec RC30 (Kegeldurchmesser 50 mm, Kegelwinkel 1°, Kegelspitze-PlattenAbstand 0.05 mm, Scherrate 10 s⁻¹) gemessen.

Die **Aminzahl** wurde durch Titration bestimmt (mit 0.1_{N} HClO₄ in Essigsäure gegen Kristallviolett).

### Verwendete Substanzen und Abkürzungen:

| | |
|---|---|
| Sikafloor^{®}-264N (A) | Sikafloor^{®}-264N Komponente A (RAL 5005), gefüllte pigmentierte Harzkomponente einer Epoxidharz-Bodenbeschichtung, EEW 450 g/Eq (von Sika) |
| Sikadur^{®}-30 (A) | Sikadur^{®}-30 Komponente A, Quarz-gefüllte Harzkomponente eines strukturellen Epoxidharz-Klebstoffes, enthaltend Bisphenol-A-Diglycidylether und 1,4-Butandiol-Diglycidylether, EEW ca. 700 g/Eq (von Sika) |
| B-EDA | N-Benzyl-1,2-ethandiamin, hergestellt wie nachfolgend beschrieben, AHEW 50.1 g/Eq |
| B-PDA | N-Benzyl-1,2-propandiamin, hergestellt wie nachfolgend beschrieben, AHEW 54.8 g/Eq |
| TEPA | Tetraethylenpentamin, AHEW ca. 30 g/Eq (technisch, von Huntsman) |
| BHMT | Bis(6-aminohexyl)amin, AHEW ca. 43 g/Eq (Dytek^{®} BHMT-HP, von Invista) |
| BHMT-50 | technische Qualität von Bis(6-aminohexyl)amin mit einer Reinheit im Bereich von 50 bis 78 Gewichts-%, AHEW ca. 48 g/Eq (Dytek^{®} BHMT Amine (50-78%), von Invista) |
| PEI | Polyethylenimin, mittleres Molekulargewicht ca. 800 g/mol, AHEW ca. 38 g/Eq (Lupasol^{®} FG, von BASF) |
| IPDA | 3-Aminomethyl-3,5,5-trimethylcyclohexylamin, AHEW 42.6 g/Eq (Vestamin^{®} IPD, von Evonik) |
| BAC | 1,3-Bis(aminomethyl)cyclohexan, AHEW 35.5 g/Eq (von Mitsubishi Gas Chemical) |
| TMD | 2,2(4),4-Trimethylhexamethylendiamin, AHEW 39.6 g/Eq (Vestamin^{®} TMD, von Evonik) |
| MPMD | 1,5-Diamino-2-methylpentan, AHEW 29.0 g/Eq (Dytek^{®} A, von Invista) |
| Addukt-1 | Addukt aus 1,2-Propylendiamin und technischem o-Kresylglycidylether, hergestellt wie nachfolgend beschrieben, AHEW 90 g/Eq |
| DMAPAPA | 3-(3-(Dimethylamino)propylamino)propylamin, AHEW 53 g/Eq (DMAPAPA, von Arkema). |
| Ca-Nitrat-Lösung | 50 Gewichts-% Calciumnitrat-Tetrahydrat in Wasser |
| Ancamine^{®} K54 | 2,4,6-Tris(dimethylaminomethyl)phenol (von Air Products) |
| Quarzmehl | Korngrösse 0 bis 75 µm |
| Quarzsand | Korngrösse 0.1 bis 0.3 mm |
| gefällte Kreide | mit Stearat beschichtete gefällte Kreide (Socal^{®} U1S2, von Solvay) |

B-EDA und B-PDA sind Amine **A1**. TEPA, BHMT, BHMT-50 und PEI sind Amine **A2**.

### N-Benzyl-1,2-ethandiamin (B-EDA):

In einem Rundkolben wurden 180.3 g (3 mol) 1,2-Ethylendiamin unter Stickstoffatmosphäre bei Raumtemperatur vorgelegt. Unter gutem Rühren wurde langsam eine Lösung aus 106.0 g (1 mol) Benzaldehyd in 1200 ml Isopropanol dazugetropft und 2 Stunden nachgerührt. Die Reaktionsmischung wurde anschliessend bei einem Wasserstoff-Druck von 80 bar, einer Temperatur von 80 °C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Ethylendiamin, Wasser und Isopropanol entfernt wurden. Die so erhaltene Reaktionsmischung war eine klare, leicht gelbliche Flüssigkeit mit einer Aminzahl von 678 mg KOH/g. Davon wurden 50 g bei 80°C unter Vakuum destilliert, wobei 31.3 g Destillat bei einer Dampftemperatur von 60 bis 65°C und 0.06 mbar aufgefangen wurden. Erhalten wurde eine farblose Flüssigkeit mit einer Viskosität von 8.3 mPa·s bei 20°C, einer Aminzahl von 750 mg KOH/g und einer mittels GC bestimmten Reinheit von > 97%.

### N-Benzyl-1,2-propandiamin (B-PDA):

In einem Rundkolben wurden 444.8 g (6 mol) 1,2-Propandiamin unter Stickstoffatmosphäre bei Raumtemperatur vorgelegt. Unter gutem Rühren wurde langsam eine Lösung aus 212.2 g (2 mol) Benzaldehyd in 1'500 ml Isopropanol dazugetropft und 2 Stunden nachgerührt. Die Reaktionsmischung wurde anschliessend bei einem Wasserstoff-Druck von 90 bar, einer Temperatur von 85 °C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Propandiamin, Isopropanol und Wasser entfernt wurden. Es wurde eine klare, leicht gelbliche Flüssigkeit erhalten. Davon wurden 300 g bei 80°C unter Vakuum destilliert, wobei 237.5 g Destillat bei einer Dampftemperatur von 60 bis 65°C und 0.08 mbar aufgefangen wurden. Erhalten wurde eine farblose Flüssigkeit mit einer Aminzahl von 682 mg KOH/g, welche gemäss ¹H-NMR eine Mischung aus N¹-Benzyl-1,2-propandiamin und N²-Benzyl-1,2-propandiamin im Verhältnis von ca. 2/1 darstellte und eine GC-Reinheit von >97% aufwies.

### Addukt-1:

Es wurden 4.15 kg 1,2-Propylendiamin unter Stickstoffatmosphäre vorgelegt, auf 70°C aufgewärmt und dann unter gutem Rühren langsam mit 2.93 kg Araldite^{®} DY-K (o-Kresylglycidylether technisch, von Huntsman) versetzt, wobei die Temperatur der Reaktionsmischung 70 bis 80°C betrug. Nach 1 Stunde bei 80°C wurde die Reaktionsmischung abgekühlt und die flüchtigen Bestandteile destillativ mittels Dünnschichtverdampfer (0.5-1 mbar, Manteltemperatur 115°C) entfernt.

Herstellung von Epoxidharz-Zusammensetzungen:

### Beispiele 1 bis 13: (Beschichtungen)

Für jedes Beispiel wurden die in den Tabellen 1 bis 2 angegebenen Inhaltsstoffe der Härter-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.

Als Harz-Komponente wurde Sikafloor^{®}-264N Komp. A (blau) (von Sika) in der in den Tabellen 1 bis 2 angegebenen Menge (in Gewichtsteilen) eingesetzt. Anschliessend wurden die beiden Komponenten jeder Zusammensetzung mittels des Zentrifugalmischers zu einer homogenen Flüssigkeit verarbeitet und diese unverzüglich folgendermassen geprüft:
10 Minuten nach dem Vermischen wurde die Viskosität bei 20°C gemessen ("**Viskosität (10')**").

Für die Bestimmung der **Shore D-Härte** nach DIN 53505 wurden je zwei zylindrische Prüfkörper (Durchmesser 20 mm, Dicke 5 mm) hergestellt. Einer wurde im Normklima gelagert und die Härte nach 1 Tag und nach 2 Tagen gemessen (1d NK) bzw. (2d NK), der andere wurde bei 8°C und 80% relativer Feuchtigkeit gelagert und die Härte nach 1 Tag und nach 2 Tagen im kalten Zustand gemessen (1d 8°/80%) bzw. (2d 8°/80%).

Ein erster Film wurde in einer Schichtdicke von 500 µm auf eine Glasplatte aufgezogen und dieser im Normklima gelagert bzw. ausgehärtet. An diesem Film wurde die **Königshärte** (Pendelhärte nach König, gemessen nach DIN EN ISO 1522) nach 1 Tag ("Königshärte (1d NK)"), nach 2 Tagen ("Königshärte (2d NK)"), nach 4 Tagen ("Königshärte (4d NK)"), nach 7 Tagen ("Königshärte (7d NK)") und nach 14 Tagen ("Königshärte (14d NK)") bestimmt. Nach 14 Tagen wurde der Aspekt des Films beurteilt (in der Tabelle mit "**Aspekt (NK)**" bezeichnet). Als "schön" wurde dabei ein Film bezeichnet, welcher eine glänzende und nichtklebrige Oberfläche ohne Struktur aufwies. Als "Struktur" wird dabei jegliche Art von Zeichnung oder Muster auf der Oberfläche bezeichnet. Als "matt" wurde ein Film mit einer nichtklebrigen Oberfläche ohne Struktur mit reduziertem Glanz bezeichnet.

Ein zweiter Film wurde in einer Schichtdicke von 500 µm auf eine Glasplatte aufgezogen und dieser unmittelbar nach dem Applizieren während 7 Tagen bei 8°C und 80% relativer Feuchtigkeit und anschliessend während 2 Wochen im Normklima gelagert, beziehungsweise ausgehärtet. 24 Stunden nach der Applikation wurde ein Flaschendeckel aus Polypropylen auf den Film aufgesetzt, unter welchem ein feuchter Schwamm platziert war. Nach weiteren 24 Stunden wurden der Schwamm und der Deckel entfernt und an einer neuen Stelle des Films platziert, wo sie nach 24 Stunden wieder entfernt und neu platziert wurden, insgesamt 4 mal. Anschliessend wurde der Aspekt dieses Films beurteilt (in den Tabellen mit "**Aspekt (8°/80%)**" bezeichnet), auf die gleiche Weise wie für den Aspekt (NK) beschrieben. Dabei wurde jeweils auch die Anzahl und Art der sichtbaren Marken angegeben, die im Film durch den feuchten Schwamm oder den aufgesetzten Deckel entstanden waren. Als "Blushing" wurde die Anzahl weiss verfärbte Flecken angegeben. Als "Ring" wurde die Stärke eines allfälligen ringförmigen Abdrucks durch Einsinken des ersten, 24h nach Applikation aufgesetzten Deckels angegeben. Ein solcher ringförmiger Abdruck zeigt an, dass die Beschichtung noch nicht begehbar ist. An den so ausgehärteten Filmen wurde wiederum die Königshärte bestimmt, jeweils nach 7 Tagen bei 8°C und 80% relativer Feuchtigkeit ("Königsh. (7d 8°/80%)"), dann nach weiteren 2 Tagen im NK ("Königsh. (+2d NK)") bzw. 7 Tagen im NK ("Königsh. (+7d NK)") bzw. 14d im NK ("Königsh. (+14d NK)").

Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet (**Q-Sun (72h)**). Anschliessend wurde der Farbunterschied ΔE des so belasteten Films im Vergleich zum entsprechenden nicht belasteten Film mittels einem Colorimeter NH310 von Shenzen 3NH Technology Co. LTD, ausgerüstet mit Silicon Photoelectric Diode Detector, Light Source A, Color Space Measurement Interface CIE L*a*b*C*H*, bestimmt. ΔE-Werte bis 5 stehen für eine leichte Vergilbung.

Die Resultate sind in den Tabellen 1 bis 2 angegeben.

Die mit "(Ref.)" bezeichneten Beispiele sind Vergleichsbeispiele.

**Tabelle 1: Zusammensetzung und Eigenschaften der Beispiele 1 bis 7.**

| **Beispiel** | | **1 (Ref.)** | **2** | **3** | **4** | **5** | **6 (Ref.)** | **7** |
|---|---|---|---|---|---|---|---|---|
| **Harz-Komp.:** Sikafloor^{®}-264N (A) | | 450.0 | 450.0 | 450.0 | 450.0 | 450.0 | 450.0 | 450.0 |
| **Härter-Komp.:** | | | | | | | | |
| **B-EDA** | | 50.1 | 45.9 | 42.6 | 37.6 | 30.6 | | - |
| **B-PDA** | | - | - | - | - | - | 27.4 | 21.9 |
| **TEPA** | | - | 3.0 | 4.5 | 7.5 | 12.0 | - | 6.0 |
| Addukt-1 | | - | - | - | - | - | 45.0 | 36.0 |
| Benzylalkohol | | 10.0 | 10.0 | 10.0 | 10.0 | 10.0 | 10.0 | 10.0 |
| Ca-Nitrat-Lösung | | 2.0 | 2.0 | 2.0 | 2.0 | 2.0 | 2.0 | 2.0 |
| Ancamine^{®} K54 | | 2.0 | 2.0 | 2.0 | 2.0 | 2.0 | 2.0 | 2.0 |
| Verhältnis **A1** / **A2** ¹ | | - | 15.3/1 | 9.5/1 | 5/1 | 2.6/1 | - | 3.7/1 |
| Viskosität (10') [Pa·s] | | 1.6 | 1.7 | 1.8 | 2.1 | 2.7 | 3.2 | 3.4 |
| Shore D | (1d NK) | 63 | 71 | 73 | 75 | 76 | 67 | 75 |
| | (2d NK) | 67 | 75 | 75 | 75 | 78 | 73 | 80 |
| Shore D | (1d 8°/80%) | 17 | 49 | 51 | 53 | 60 | n.m. | 9 |
| | (2d 8°/80%) | 64 | 69 | 71 | 75 | 77 | 55 | 57 |
| Königshärte [s] | (1d NK) | 43 | 50 | 52 | 53 | 50 | 32 | 59 |
| | (2d NK) | 56 | 74 | 76 | 77 | 80 | 104 | 113 |
| | (4d NK) | 78 | 87 | 92 | 95 | 97 | 141 | 150 |
| | (7d NK) | 94 | 94 | 99 | 105 | 119 | 168 | 168 |
| | (14d NK) | 109 | 111 | 120 | 129 | 126 | 168 | 169 |
| Aspekt (NK) | | schön | schön | schön | schön | schön | schön | schön |
| Q-Sun (72h) ΔE | | 5.3 | 4.8 | 4.4 | 3.4 | 4.9 | 3.5 | 3.8 |
| Königsh.(7d [s] | 8°/80%) | 9 | 16 | 17 | 21 | 28 | 38 | 41 |
| | (+2d NK) | 20 | 38 | 37 | 45 | 80 | 130 | 122 |
| | (+7d NK) | 29 | 54 | 56 | 71 | 99 | 132 | 125 |
| | (+14d NK) | 46 | 70 | 77 | 94 | 129 | 144 | 139 |
| Aspekt (8°/80%) Blushing Ring | | schön 1 leicht | schön 1 kein | schön 1 kein | schön 1 kein | matt 1 kein | matt 1 stark | matt 1 leicht |

| | | | | | | | | |
|---|---|---|---|---|---|---|---|---|
| ¹ Gewichtsverhältnis zwischen Amin **A1** und Amin **A2** "n.m." steht für "nicht messbar" (zu weich) | | | | | | | | |

**Tabelle 2: Zusammensetzung und Eigenschaften der Beispiele 8 bis 13.**

| **Beispiel** | | **8** | **9** | **10 (Ref.)** | **11 (Ref.)** | **12 (Ref.)** | **13 (Ref.)** |
|---|---|---|---|---|---|---|---|
| **Harz-Komp.:** | | | | | | | |
| .Sikafloor^{®}-264N (A) | | 450.0 | 450.0 | 450.0 | 450.0 | 450.0 | 450.0 |
| **Härter-Komp.:** | | | | | | | |
| **B-EDA** | | 42.6 | 42.6 | 42.6 | 42.6 | 42.6 | 42.6 |
| Amin | | **BHMT²** 6.5 | **PEI** 5.7 | **IPDA** 6.4 | **BAC** 5.3 | **TMD** 5.9 | **MPMD** 4.4 |
| Benzylalkohol | | 10.0 | 10.0 | 10.0 | 10.0 | 10.0 | 10.0 |
| Ca-Nitrat-Lösung | | 2.0 | 2.0 | 2.0 | 2.0 | 2.0 | 2.0 |
| Ancamine^{®} K54 | | 2.0 | 2.0 | 2.0 | 2.0 | 2.0 | 2.0 |
| Verhältnis **A1** / **A2** ¹ | | 6.6/1 | 7.5/1 | - | - | - | - |
| Viskosität (10') [Pa·s] | | 2.05 | 2.15 | 2.33 | 2.17 | 2.34 | 2.28 |
| Shore D | (1d NK) | 70 | 75 | 71 | 44 | 72 | 72 |
| | (2d NK) | 71 | 73 | 76 | 63 | 76 | 76 |
| Shore D | (1d 8°/80%) | 53 | 48 | 45 | 53 | 50 | 48 |
| | (2d 8°/80%) | 70 | 72 | 68 | 70 | 69 | 68 |
| Königshärte [s] | (1d NK) | 39 | 53 | 41 | 43 | 38 | 31 |
| | (2d NK) | 60 | 78 | 78 | 71 | 70 | 59 |
| | (4d NK) | 74 | 94 | 97 | 83 | 83 | 71 |
| | (7d NK) | 85 | 99 | 106 | 90 | 92 | 77 |
| | (14d NK) | 104 | 122 | 125 | 140 | 105 | 97 |
| Aspekt (NK) | | schön | schön | schön | schön | schön | schön |
| Q-Sun (72h) ΔE | | 6.6 | 5.6 | 5.6 | 5.5 | 5.8 | 5.7 |
| Königsh. [s] | (7d 8°/80%) | 14 | 17 | 13 | 14 | 10 | 13 |
| | (+2d NK) | 34 | 36 | 42 | 33 | 33 | 25 |
| | (+7d NK) | 59 | 55 | 60 | 43 | 50 | 36 |
| | (+14d NK) | 83 | 73 | 76 | 59 | 71 | 57 |
| Aspekt (8°/80%) Blushing Ring | | schön 1 kein | matt 1 kein | matt / klebrig 1 kein | matt / klebrig 3 kein | matt / klebrig 3 kein | matt / klebrig 1 kein |

| | | | | | | | |
|---|---|---|---|---|---|---|---|
| ¹ Gewichtsverhältnis zwischen Amin **A1** und Amin **A2** ² gelöst in B-EDA | | | | | | | |

### Beispiele 14 bis 20: (Klebstoffe)

Für jedes Beispiel wurden die in der Tabelle 3 angegebenen Inhaltsstoffe der Härter-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.

Als Harz-Komponente wurde Sikadur^{®}-30 Komponente A (von Sika) in der Tabelle 3 angegebenen Menge (in Gewichtsteilen) eingesetzt.

Für jedes Beispiel wurden dann die Harz- und die Härter-Komponente mittels des Zentrifugalmischers zu einer homogenen Paste verarbeitet und diese unverzüglich folgendermassen geprüft:
Die **Topfzeit** wurde im Normklima bestimmt, indem der vermischte Klebstoff mittels eines Spatels alle 5 min. bewegt wurde, bis der Klebstoff so stark angedickt war, dass er nicht mehr zu verarbeiten war.

Die mechanischen Eigenschaften wurden bestimmt, indem der gemischte Klebstoff im Normklima in eine Silikonform zu hantelförmigen Stäben mit einer Dicke von 10 mm, einer Länge von 150 mm, bei einer Steglänge von 80 mm und einer Stegbreite von 10 mm, appliziert und ausgehärtet wurden. Die Zugstäbe wurden nach 7 Tagen Aushärtungszeit aus der Form gelöst und damit die Zugfestigkeit ("**Zugfest**.") und die Bruchdehnung ("**Bruchdehn.**") gemäss EN ISO 527 bei einer Zuggeschwindigkeit von 1 mm/min gemessen.

Die Beschaffenheit der **Oberfläche** wurde beurteilt an den hantelförmigen Stäben zur Bestimmung der mechanischen Eigenschafen an der bei der Aushärtung der Luft ausgesetzten Seite. Als "smooth" wurde eine nicht-klebrige Oberfläche bezeichent.

Zur Messung der Zugscherfestigkeit auf Stahl (**LSS** Stahl) wurden mehrere Verklebungen hergestellt, wobei der gemischte Klebstoff zwischen zwei mit Heptan entfettete Stahlbleche in einer Schichtdicke von 0.5 mm mit einer überlappenden Klebefläche von 10 × 25 mm aufgebracht wurde. Nach einer Aufbewahrungszeit von 7 Tagen im Normklima wurde die Zugscherfestigkeit nach DIN EN 1465 mit einer Zuggeschwindigkeit von 10 mm/min bestimmt.

Zur Messung der Zugscherfestigkeit auf Kohlefaser-Verbundwerkstoff (CFK) (**LSS** CFK) wurden mehrere Verklebungen hergestellt, wobei der vermischte Klebstoff zwischen zwei mit Heptan entfettete Sika^{®} CarboDur^{®} S512 Lamellen in einer Schichtdicke von 0.5 mm mit einer überlappenden Klebefläche von 10 × 50 mm aufgebracht wurde. Nach einer Aufbewahrungszeit von 7 Tagen im NK wurde die Zugscherfestigkeit wie beschrieben bestimmt.

Die Druckfestigkeit ("**Druckfest**.") wurde bestimmt, indem der gemischte Klebstoff im Normklima in einer Silikonform zu Quadern der Dimensionen 12.7 × 12.7 × 25.4 mm appliziert und diese im Normklima ausgehärtet wurden. Nach 7 Tagen wurden mehrere solche Quader aus der Form gelöst und nach ASTM D695 bei einer Prüfgeschwindigkeit von 1.3 mm/min bis zur Zerstörung komprimiert, wobei der Wert für die Druckfestigkeit jeweils bei der maximalen Kraft abgelesen wurde.

Der **Tg**-Wert (Glasübergangstemperatur) wurde mittels DSC an ausgehärteten Klebstoff-Proben bestimmt, welche 14 Tagen im Normklima gelagert waren, mit einem Mettler Toledo DSC 3+ 700 Gerät und dem Messprogramm (1) -10 °C während 2 min, (2) -10 bis 200 °C mit einer Aufheizrate von 10 K/min (= 1st run), (3) 200 bis -10 °C mit einer Kühlrate von -50 K/min, (4) -10 °C während 2 min, (5) -10 bis 180 °C mit einer Aufheizrate von 10 K/min (= 2nd run).

Die Resultate sind in der Tabelle 3 angegeben.

Die mit "(Ref.)" bezeichneten Beispiele sind Vergleichsbeispiele.

**Tabelle 3: Zusammensetzung und Eigenschaften der Beispiele 14 bis 20.**

| **Beispiel** | **14 (Ref.)** | **15 (Ref.)** | **16** | **17** | **18** | **19** | **20** |
|---|---|---|---|---|---|---|---|
| **Harz-Komp.:** | | | | | | | |
| Sikadur^{®}-30 (A) | 300.0 | 300.0 | 300.0 | 300.0 | 300.0 | 300.0 | 300.0 |
| **Härter-Komp.:** | | | | | | | |
| **B-EDA** | 21.5 | 15.8 | 13.6 | 10.8 | 10.8 | 7.1 | 5.6 |
| **TEPA** | - | | 1.5 | 3.0 | | 3.0 | 3.0 |
| **BHMT-50** | - | - | - | - | 4.8 | 3.5 | 5.0 |
| DMAPAPA | - | 6.0 | 6.0 | 6.0 | 6.0 | 6.0 | 6.0 |
| Quarzmehl | 35.3 | 35.2 | 35.2 | 36.5 | 34.7 | 36.6 | 36.6 |
| Quarzsand | 28.2 | 28.0 | 28.7 | 28.7 | 28.7 | 28.8 | 28.8 |
| gefällte Kreide | 15.0 | 15.0 | 15.0 | 15.0 | 15.0 | 15.0 | 15.0 |
| Verhältnis **A1/A2** ¹ | - | - | 9.7 / 1 | 3.6 / 1 | 2.3 / 1 | 1.1 / 1 | 1 / 1.4 |
| **Topfzeit** [h:min] | 2:00 | 1:30 | 1:20 | 1:15 | 1:30 | 1:30 | 1:30 |
| **Zugfest.:** [MPa] | 34 | 35 | 36 | 31 | 40 | 37 | 35 |
| **Bruchdehn.** [%] | 0.3 | 0.3 | 0.3 | 0.2 | 0.3 | 0.3 | 0.3 |
| **Oberfläche** | smooth | smooth | smooth | smooth | smooth | smooth | smooth |
| **LSS** Stahl [MPa] | 6.2 | 11.2 | 10.6 | 10.8 | 12.5 | 13.7 | 15.2 |
| **LSS** CFK [MPa] | 8.3 | 8.5 | 9.0 | 10.0 | 12.1 | 10.2 | 10.0 |
| **Druckfest.** [MPa] | 90 | 109 | 111 | 107 | 111 | 109 | 110 |
| **Tg** 1st/2nd run [°C] | 48/57 | 58/60 | 58/68 | 59/68 | 57/63 | 61/64 | 61/69 |

| | | | | | | | |
|---|---|---|---|---|---|---|---|
| ¹ Gewichtsverhältnis zwischen Amin **A1** und Amin **A2** | | | | | | | |

## Patentansprüche

1. Härter für Epoxidharze enthaltend mindestens ein Amin **A1** der Formel (I), 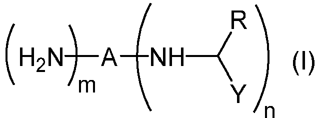 wobei
m für 0 oder 1, n für 1 oder 2 und (m+n) für 2 stehen,
A für 1,2-Ethylen oder 1,2-Propylen steht,
R für H oder einen Alkylrest mit 1 bis 12 C-Atomen steht, und
Y für einen gegebenenfalls substituierten aromatischen oder cycloaliphatischen Rest mit 6 bis 20 C-Atomen steht,
und mindestens ein Amin **A2**, welches ein Polyalkylenamin oder Polyethylenimin ist, wobei das Gewichtsverhältnis zwischen Amin **A1** und Amin **A2** im Bereich von 20/1 bis 1/2 liegt.

2. Härter gemäss Anspruch 1, **dadurch gekennzeichnet, dass** Y für einen Phenyl-Rest steht.

3. Härter gemäss einem der Ansprüche 1 oder 2, **dadurch gekennzeichnet, dass** m und n jeweils für 1 stehen.

4. Härter gemäss einem der Ansprüche 1 bis 3, **dadurch gekennzeichnet, dass** das Amin **A1** der Formel (I) N-Benzyl-1,2-ethandiamin ist.

5. Härter gemäss einem der Ansprüche 1 bis 4, **dadurch gekennzeichnet, dass** das Amin **A2** ein Polyalkylenamin der Formel (II) ist, 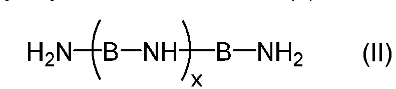 wobei
x für eine ganze Zahl von 1 bis 6 steht, und
B unabhängig voneinander für einen Alkylenrest mit 2 bis 6 C-Atomen steht.

6. Härter gemäss einem der Ansprüche 1 bis 5, **dadurch gekennzeichnet, dass** das Gewichtsverhältnis zwischen Amin **A1** und Amin **A2** im Bereich von 15/1 bis 1/1 liegt.

7. Härter gemäss einem der Ansprüche 1 bis 5, **dadurch gekennzeichnet, dass** das Gewichtsverhältnis zwischen Amin **A1** und Amin **A2** im Bereich von 10/1 bis 1/2 liegt.

8. Härter gemäss einem der Ansprüche 1 bis 7, **dadurch gekennzeichnet, dass** mindestens ein weiteres Amin ausgewählt aus der Gruppe bestehend aus 2,2(4),4-Trimethyl-1,6-hexandiamin, 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)methan, 1-Amino-3-aminomethyl-3,5,5-trimethylcyclohexan, 2(4)-Methyl-1,3-diaminocyclohexan, 1,3-Bis(aminomethyl)benzol, Polyoxypropylendiaminen mit einem mittlerem Molekulargewicht Mₙ im Bereich von 200 bis 500 g/mol, 3-(3-(Dimethylamino)propylamino)propylamin, Addukte dieser oder weiterer Polyamine mit Mono- oder Diepoxiden und Mannich-Basen enthalten ist.

9. Härter gemäss einem der Ansprüche 1 bis 8, **dadurch gekennzeichnet, dass** als weiteres Amin 1-Amino-3-aminomethyl-3,5,5-trimethylcyclohexan enthalten ist.

10. Härter gemäss einem der Ansprüche 1 bis 8, **dadurch gekennzeichnet, dass** als weiteres Amin 3-(3-(Dimethylamino)propylamino)propylamin enthalten ist.

11. Epoxidharz-Zusammensetzung umfassend
- eine Harz-Komponente enthaltend mindestens ein Epoxidharz und
- eine Härter-Komponente umfassend den Härter gemäss einem der Ansprüche 1 bis 10.

12. Epoxidharz-Zusammensetzung gemäss Anspruch 11, **dadurch gekennzeichnet, dass** sie mindestens einen weiteren Bestandteil ausgewählt aus der Gruppe bestehend aus Verdünnern, Beschleunigern und Füllstoffen enthält.

13. Verfahren zum Beschichten umfassend die Schritte
(i) Vermischen der Komponenten der Epoxidharz-Zusammensetzung gemäss einem der Ansprüche 11 oder 12,
(ii) Applizieren der vermischten Zusammensetzung auf ein Substrat innerhalb der Topfzeit,
gefolgt von der Aushärtung der vermischten Zusammensetzung.

14. Verfahren zum Verkleben umfassend die Schritte
(i) Vermischen der Komponenten der Epoxidharz-Zusammensetzung gemäss einem der Ansprüche 11 oder 12,
(ii) Applizieren der vermischten Zusammensetzung innerhalb der Topfzeit,
- entweder auf mindestens eines der zu verklebenden Substrate und Fügen der Substrate zu einer Verklebung innerhalb der Offenzeit,
- oder in einen Hohlraum oder Spalt zwischen mehreren Substraten und gegebenenfalls Einfügen eines Ankers in den Hohlraum oder Spalt innerhalb der Offenzeit,
gefolgt von der Aushärtung der vermischten Zusammensetzung.

15. Artikel erhalten aus einem Verfahren gemäss einem der Ansprüche 13 oder 14.

## Claims

1. A curing agent for epoxy resins comprising at least one amine **A1** of the formula (I) 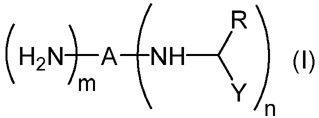 where
m is 0 or 1, n is 1 or 2 and (m+n) is 2,
A is 1,2-ethylene or 1,2-propylene,
R is H or an alkyl radical having 1 to 12 carbon atoms, and
Y is an optionally substituted aromatic or cycloaliphatic radical having 6 to 20 carbon atoms,
and at least one amine **A2** which is a polyalkyleneamine or polyethyleneimine, where the weight ratio between amine **A1** and amine **A2** is in the range from 20/1 to 1/2.

2. The curing agent as claimed in claim 1, **characterized in that** Y is a phenyl radical.

3. The curing agent as claimed in either of claims 1 and 2, **characterized in that** m and n are each 1.

4. The curing agent as claimed in any of claims 1 to 3, **characterized in that** the amine **A1** of the formula (I) is N-benzylethane-1,2-diamine.

5. The curing agent as claimed in any of claims 1 to 4, **characterized in that** the amine **A2** is a polyalkyleneamine of the formula (II) 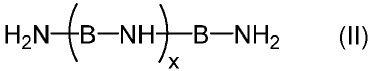 where
x is an integer from 1 to 6, and
B is independently an alkylene radical having 2 to 6 carbon atoms.

6. The curing agent as claimed in any of claims 1 to 5, **characterized in that** the weight ratio between amine **A1** and amine **A2** is in the range from 15/1 to 1/1.

7. The curing agent as claimed in any of claims 1 to 5, **characterized in that** the weight ratio between amine **A1** and amine **A2** is in the range from 10/1 to 1/2.

8. The curing agent as claimed in any of claims 1 to 7, **characterized in that** it comprises at least one further amine selected from the group consisting of 2,2(4),4-trimethylhexane-1,6-diamine, 1,2-, 1,3- or 1,4-diaminocyclohexane, 1,3-bis(aminomethyl)cyclohexane, 1,4-bis(aminomethyl)cyclohexane, bis(4-aminocyclohexyl)methane, 1-amino-3-aminomethyl-3,5,5-trimethylcyclohexane, 2(4)-methyl-1,3-diaminocyclohexane, 1,3-bis(aminomethyl)benzene, polyoxypropylenediamines having an average molecular weight Mₙ in the range from 200 to 500 g/mol, 3-(3-(dimethylamino)propylamino)propylamine, adducts of these or further polyamines with mono- or diepoxides, and Mannich bases.

9. The curing agent as claimed in any of claims 1 to 8, **characterized in that** the further amine present is 1-amino-3-aminomethyl-3,5, 5-trimethylcyclohexane.

10. The curing agent as claimed in any of claims 1 to 8, **characterized in that** the further amine present is 3-(3-(dimethylamino)propylamino)propylamine.

11. An epoxy resin composition comprising
- a resin component comprising at least one epoxy resin and
- a hardener component comprising the curing agent as claimed in any of claims 1 to 10.

12. The epoxy resin composition as claimed in claim 11, **characterized in that** it comprises at least one further constituent selected from the group consisting of thinners, accelerators and fillers.

13. A method of coating, comprising the steps of
(i) mixing the components of the epoxy resin composition as claimed in either of claims 11 and 12,
(ii) applying the mixed composition to a substrate within the pot life,
followed by the curing of the mixed composition.

14. A method of bonding, comprising the steps of
(i) mixing the components of the epoxy resin composition as claimed in either of claims 11 and 12,
(ii) applying the mixed composition within the pot life,
- either to at least one of the substrates to be bonded and joining the substrates to form a bond within the open time,
- or into a cavity or gap between two or more substrates and optionally inserting an anchor into the cavity or gap within the open time, followed by the curing of the mixed composition.

15. An article obtained from a method as claimed in either of claims 13 and 14.

## Revendications

1. Durcisseur pour résines époxyde contenant au moins une amine A1 de formule (I), 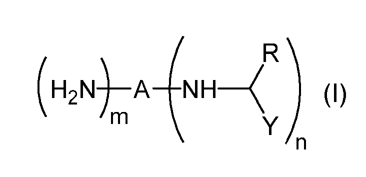 dans laquelle
m représente 0 ou 1, n représente 1 ou 2 et (m + n) représente 2,
A représente 1,2-éthylène ou 1,2-propylène,
R représente H ou un radical alkyle comprenant 1 à 12 atomes de carbone et
Y représente un cycle aromatique ou cycloaliphatique le cas échéant substitué, comprenant 6 à 20 atomes de carbone,
et au moins une amine A2, qui est une polyalkylène-amine ou une polyéthylène-imine, le rapport pondéral entre l'amine A1 et l'amine A2 étant situé dans la plage de 20/1 à 1/2.

2. Durcisseur selon la revendication 1, **caractérisé en ce que** Y représente un radical phényle.

3. Durcisseur selon l'une quelconque des revendications 1 ou 2, **caractérisé en ce que** m et n représentent à chaque fois 1.

4. Durcisseur selon l'une quelconque des revendications 1 à 3, **caractérisé en ce que** l'amine A1 de formule (I) est la N-benzyl-1,2-éthanediamine.

5. Durcisseur selon l'une quelconque des revendications 1 à 4, **caractérisé en ce que** l'amine A2 est une polyalkylène-amine de formule (II), 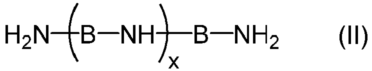 dans laquelle
x représente un nombre entier de 1 à 6 et
B représente, indépendamment, un radical alkylène comprenant 2 à 6 atomes de carbone.

6. Durcisseur selon l'une quelconque des revendications 1 à 5, **caractérisé en ce que** le rapport pondéral entre l'amine A1 et l'amine A2 se situe dans la plage de 15/1 à 1/1.

7. Durcisseur selon l'une quelconque des revendications 1 à 5, **caractérisé en ce que** le rapport pondéral entre l'amine A1 et l'amine A2 se situe dans la plage de 10/1 à 1/2.

8. Durcisseur selon l'une quelconque des revendications 1 à 7, **caractérisé en ce qu'**au moins une autre amine, choisie dans le groupe constitué par la 2,2(4),4-triméthyl-1,6-hexanediamine, le 1,2-diaminocyclohexane, le 1,3-diaminocyclohexane ou le 1,4-diaminocyclohexane, le 1,3-bis(aminométhyl)cyclohexane, le 1,4-bis(aminométhyl)cyclohexane, le bis(4-aminocyclohexyl)méthane, le 1-amino-3-aminométhyl-3,5,5-triméthylcyclohexane, le 2(4)-méthyl-1,3-diaminocyclohexane, le 1,3-bis(aminométhyl)benzène, les polyoxypropylènediamines présentant un poids moléculaire moyen Mₙ dans la plage de 200 à 500 g/mole, la 3-(3-(diméthylamino)propylamino)propylamine, les produits d'addition de ces polyamines ou d'autres polyamines avec des monoépoxydes ou des diépoxydes et des bases de Mannich.

9. Durcisseur selon l'une quelconque des revendications 1 à 8, **caractérisé en ce que** du 1-amino-3-aminométhyl-3,5,5-triméthylcyclohexane est contenu comme autre amine.

10. Durcisseur selon l'une quelconque des revendications 1 à 8, **caractérisé en ce que** de la 3-(3-(diméthylamino)propylamino)propylamine est contenue comme autre amine.

11. Composition de résine époxyde comprenant
- un composant de résine, contenant au moins une résine époxyde et
- un composant durcisseur, comprenant le durcisseur selon l'une quelconque des revendications 1 à 10.

12. Composition de résine époxyde selon la revendication 11, **caractérisée en ce qu'**elle contient au moins un autre constituant choisi dans le groupe constitué par les diluants, les accélérateurs et les charges.

13. Procédé pour le revêtement, comprenant les étapes
(i) mélange des composants de la composition de résine époxyde selon l'une quelconque des revendications 11 à 12,
(ii) application de la composition mélangée sur un substrat dans le temps de vie en pot,
suivie du durcissement de la composition mélangée.

14. Procédé pour le collage comprenant les étapes
(i) mélange des composants de la composition de résine époxyde selon l'une quelconque des revendications 11 à 12,
(ii) application de la composition mélangée dans le temps de vie en pot,
- soit sur au moins l'un des substrats à coller et assemblage des substrats pour un collage dans le temps ouvert,
- soit dans un espace creux ou dans une fente entre plusieurs substrats et le cas échéant insertion d'une ancre dans l'espace creux ou la fente dans le temps ouvert,
suivie du durcissement de la composition mélangée.

15. Article obtenu par un procédé selon l'une quelconque des revendications 13 ou 14.
